**Europäisches Patentamt**

**European Patent Office**

**Office européen des brevets**

(19)

(11) Numéro de publication: **0 052 549**
**B1**

(12) # FASCICULE DE BREVET EUROPEEN

(45) Date de publication du fascicule du brevet:
**03.10.84**

(51) Int. Cl.³: **E 04 H 9/02, E 04 B 1/36**

(21) Numéro de dépôt: **81401744.8**

(22) Date de dépôt: **30.10.81**

(54) **Dispositif d'appui disposé entre un élément de masse importante et un support fixe.**

(30) Priorité: **14.11.80 FR 8024242**

(43) Date de publication de la demande:
**26.05.82 Bulletin 82/21**

(45) Mention de la délivrance du brevet:
**03.10.84 Bulletin 84/40**

(84) Etats contractants désignés:
**AT BE CH DE FR GB IT LI**

(56) Documents cités:
**GB - A - 860 166**
**US - A - 1 761 659**
**US - A - 1 761 660**

(73) Titulaire: **Framatome, Tour Fiat 1 place de la Coupole, F-92400 Courbevoie (FR)**

(72) Inventeur: **Albin, Michel, 18 boulevard de Jardy, F-92420 Vaucresson (FR)**
Inventeur: **Bouche Pillon, Dominique, 16 boulevard du Parc, F-92200 Neuilly-Sur-Seine (FR)**

(74) Mandataire: **Bouget, Lucien et al, CREUSOT-LOIRE 15 rue Pasquier, F-75383 Paris Cedex 08 (FR)**

ACTORUM AG

# Desccription

L'invention concerne un dispositif d'appui entre un élément de masse importante et un support fixe, permettant de limiter les déplacements et les accélérations de l'élément par rapport au support, lors de mouvements provoqués par des sollicitations telles que celles provenant d'un séisme.

Dans la construction d'ouvrages ou dans la mise en place de machines, il est nécessaire de mettre en appui des structures ou des matériels de masses importantes sur des supports fixes tels que des fondations ou des dalles de support.

On connait par exemple des dispositifs d'appui destinés a transmettre des efforts entre l'élément supporté et le support qui sont constitués par des ancrages ou des articulations.

Ces dispositifs transmettent intégralement les efforts entre la structure porteuse et l'élément porté, ce qui présente des inconvénients en particulier dans le cas où des sollicitations importantes telles que celles accompagnant un séisme sont transmises à l'élément supporté.

En particulier, dans le cas de la construction des réacteurs nucléaires pour des raisons de sécurité, on peut être amené à éviter l'ulitisation de tels dispositifs d'appui qui peuvent mettre en danger les structures ou matériels supportés en cas de sollicitation importante venant par exemple du sol.

On a donc imaginé des dispositifs d'appui plus élaborés qui absorbent ou limitent les efforts.

On a par exemple proposé l'ulilisation de patins glissants plats ou de formes courbes ou de patins associés à des butées ou des absorbeurs d'énergie.

On a également proposé des dispositifs comportant des pièces d'appui ménageant des pistes de roulement et des éléments tels que des billes, assurant en association le support de la structure.

On a par exemple imaginé des dispositifs associant deux disques ayant des surfaces concaves avec des billes disposées entre ces deux surfaces concaves ou des étriers pendulaires à portée sphérique, pour le support de structures ou de machines afin de réduire les efforts transmis à l'élément porté à partir du support.

Si ces dispositifs réduisent bien les efforts transmis, ils ne peuvent limiter les déplacements relatifs de l'élément porteur et de l'élément porté que par utilisation de butées ou d'absorbeurs d'énergie, pour éviter une trop grande déformation de l'élément porté.

D'autre part, les systèmes à billes ou à portées sphériques, s'ils ont une bonne réaction aux efforts de direction quelconque, sont inutilisables dès que la masse portée dépasse un certain seuil c'est-à-dire quand l'appui par contact sur une faible surface n'est pas possible.

On connaît également des dispositifs d'appui antisismiques utilisés pour protéger les constructions qui comportent des rouleaux cylindriques horizontaux disposés suivant deux ensembles superposés, ayant des axes perpendiculaires et intercalés entre des pièces d'appui dans lesquelles sont usinées des pistes de roulement courbes et inclinées (US-A 1 761 660). Un déplacement relatif du bâtiment par rapport au sol sur lequel il repose est possible quelle que soit la direction des sollicitations sismiques, ce déplacement se décomposant en deux déplacements dans deux directions perpendiculaires. Ces déplacements sur les pistes de roulement inclinées provoquent un mouvement vertical des rouleaux et du bâtiment, ce qui absorbe l'énergie communiquée au bâtiment par le séisme et réduit le déplacement horizontal de ce bâtiment.

Pour maintenir les rouleaux entre les pièces d'appui, on prévoit des rebords à chacune des extrémités de ces pièces correspondant aux extrémités axiales du rouleau. Un tel moyen de maintien n'assure cependant pas le centrage du rouleau par rapport aux pièces d'appui correspondantes, puisqu'il faut prévoir un certain jeu entre les rebords et les extrémités du rouleau pour permettre ses déplacements. Le rouleau peut donc se déplacer dans la direction de son axe et venir frotter et se bloquer contre l'un des rebords. De même le rouleau peut se placer en biais par rapport aux pièces d'appui ce qui entraîne un fonctionnement défectueux du dispositif.

Ces inconvénients réduisent considérablement l'intérêt des dispositifs antisismiques à rouleaux, puisqu'on ne peut être sûr de leur fonctionnement correct et qu'une vérification et une remise en place de ces dispositifs est pratiquement impossible puisqu'ils ont été disposés sous un bâtiment.

Le but de l'invention est donc de proposer un dispositif d'appui disposé entre un élément de masse importante et un support fixe, permettant de limiter les déplacements et les accélérations de l'élément par rapport au support, lors de mouvements provoqués par des sollicitations telles que celles provenant d'un séisme, comportant des rouleaux cylindriques disposés horizontalement suivant deux ensembles superposés d'au moins deux rouleaux parallèles, les rouleaux d'un ensemble ayant leurs axes perpendiculaires aux axes des rouleaux de l'autre ensemble et un ensemble de trois pièces d'appui totalement indépendantes les unes des autres superposées et comportant sur leurs faces en regard des pistes de roulement inclinées par rapport au plan horizontal et présentant un profil correspondant à la forme des rouleaux dans la direction longitudinale de ceux-ci, les rouleaux du premier ensemble étant disposés entre la pièce d'appui supérieure portant l'élément et la pièce d'appui intermédiaire et étant en contact avec les pistes en regard des pièces d'appui supérieure et intermédiaire et les rouleaux du second esemble placés entre la pièce intermédiaire et la pièce inférieure reposant sur une surface horizontale du support, lesdits rouleaux étant en contact avec les pistes en regard prévues sur les pièces d'appui inférieure et intermédiaire, dispositif dont les rouleaux sont toujours parfaitement centrés par rapport aux pièces d'appui et susceptibles de se déplacer sans aucun blocage et dans des directions parfaitement définies.

Dans ce but, chacun des rouleaux comporte dans la direction axiale une partie centrale de révolution et deux parties terminales de révolution évasées vers l'extérieur.

Afin de bien faire comprendre l'invention, on va maintenant décrire, en se référant aux figures jointes en annexe, un mode de réalisation d'un dispositif d'appui suivant l'invention appliqué au support de casiers d'élements combustibles sur le fond de la piscine de stockage d'un réacteur nucléaire à eau sous pression.

La figure 1 est une vue en coupe par un plan vertical de symétrie du dispositif suivant l'invention.

La figure 2 est une vue en coupe suivant A de la figure 1.

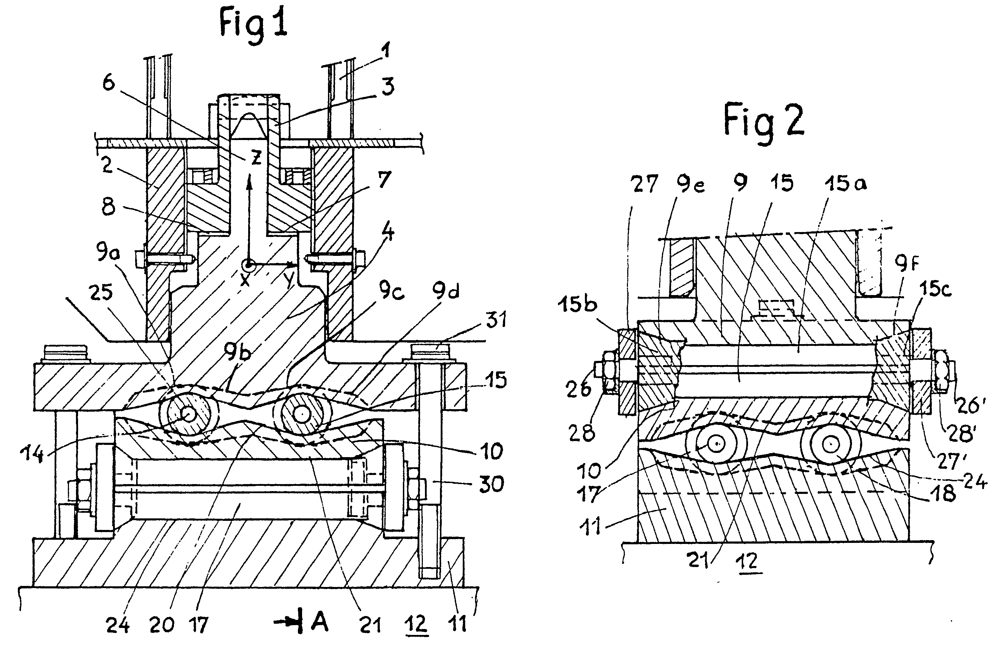

Sur la figure 1, on voit une partie d'un casier pour élément combustible 1 solidaire à sa partie inférieure d'une structure de support 2 comportant une pièce 3 pour l'engagement de la structure de support 2 sur l'extrémité supérieure du dispositif d'appui suivant l'invention.

La partie supérieure de ce dispositif d'appui est constituée par une pièce d'appui 4 dont la partie supérieure qui s'engage dans la pièce 3 de la structure de support du casier d'éléments combustibles est reéalisée sous la forme d'une broche verticale 6 comportant un épaulement 7 sur lequel vient reposer la structure 2 avec interposition de patins d'appui 8.

En se reportant aux figures 1 et 2, on voit que la partie inférieure de la pièce 4 de plus grande largeur que la partie supérieure présente une partie profilée 9 constituant un chemin de roulement.

Ce chemin de roulement 9 est usiné sur la surface inférieure de la pièce 4.

Le dispositif d'appui comporte également une seconde pièce d'appui intermédiaire 10 et une troisième d'appui 11 reposant elle-même sur le fond 12 de la piscine du combustible du réacteur.

Entre les pièces d'appui 4 et 10, sont disposés deux rouleaux à axes horizontaux 14 et 15 alors qu'entre les pièces d'appui 10 et 11 sont également disposés deux rouleaux à axes horizontaux 17 et 18.

Les axes des rouleaux 14 et 15 parallèles entre eux sont dirigés dans une première direction horizontale X alors que les axes des rouleaux 17 et 18 parallèles également sont dirigés dans une seconde direction horizontale Y perpendiculaire à la direction X.

La pièce d'appui 10 présente sur sa surface supérieure une piste de roulement 20 et sur sa surface inférieure une autre piste de roulement 21.

La pièce d'appui 11 comporte une piste de roulement 24 sur sa surface supérieure.

Les rouleaux 14 et 15 sont en contact par l'intermédiaire des pistes 9 et 20 avec les pièces d'appui 4 et 10 respectivement.

Les rouleaux 17 et 18 sont en contact avec les pièces 10 et 11 par l'intermédiaire des pistes 21 et 24 respectivement.

Les pistes 9 et 20 d'une part, et 21 et 24 d'autre part, ont une forme profilée dans la direction transversale par rapport aux rouleaux et présentent dans cette direction une succession de rampes (telles que 9a 9b et 9c sur le chemin de roulement 9) ayant des profils successivement montants et descendants.

Les profils des portions de rampes de deux pistes de roulement opposées (telles que 9 et 20), disposées l'une en face de l'autre sont inversés.

Les rouleaux 14, 15, 17 et 18 comportent une partie centrale cylindrique et deux parties terminales de faible longueur coniques permettant le centrage de ces rouleaux par rapport aux pistes de roulement qui sont également profilées dans la direction longitudinale par rapport aux rouleaux pour représenter deux parties latérales inclinées telles que 9e et 9f pour la piste de roulement 9.

Par exemple le rouleau 15 comporte une partie centrale cylindrique 15a et deux parties d'extrémités coniques 15b et 15c qui viennent respectivement en appui sur les surfaces inclinées 9e et 9f de la piste de roulement 9.

Les rouleaux comportent d'autre part, des axes de rotation (tels que 25 pour le rouleau 14) qui permettent de relier les rouleaux 14 et 15 d'une part et 17 et 18 d'autre part, par l'intermédiaire d'une pièce de liaison telle que 27 traversée par le bout d'axe 26 du rouleau 15 sur lequel est vissé un écrou 28 (ou l'ensemble 26', 27', 28' à l'autre extrémité du rouleau).

Les rouleaux 14 et 15 d'une part et 17 et 18 d'autre part, sont ainsi reliés l'un à l'autre à entraxe constant à chacune de leurs extrémités.

Lors de la mise en place du dispositif d'appui sur le fond de la piscine, les pièces d'appui et les rouleaux sont maintenus en contact grâce à des vis 30 à tête hexagonale 31 permettant de relier les supports 4 et 11, et d'exercer une force suffisante entre les supports et les rouleaux.

Lorsque le dispositif d'appui a été mis en place, on supprime les liaisons entre les supports 4 et 11 en enlevant les vis 30.

Les trois pièces d'appui sont alors totalement indépendantes.

Lorsque l'élément porté constitué par le casier d'éléments combustibles est sollicité par un effort dans la direction X ou dans la direction Y, il se produit un déplacement de l'élément par rapport à la surface de support 12, soit par déplacement de l'ensemble constitué par l'élément porté, les supports 4 et 10 ainsi que l'ensemble de rouleaux supérieurs 14 et 15 par rapport à la pièce d'appui 11, par roulement des rouleaux 17 et 18 sur les pistes 21 et 24, soit par déplacement de l'ensemble constitué par l'élément porté et le support 4 par rapport au support 10, par roulement des rouleaux 14 et 15 sur les pistes 9 et 20.

Si l'élément porté subit une sollicitation dans une direction différente de X et de Y, le déplacement de cet élément par rapport à la surface de support 12 se produit à la fois par roulement des rouleaux 14 et 15 et des rouleaux 17 et 18.

Dans tous les cas, la translation horizontale ne peut se produire qu'avec un déplacement vertical de la pièce supérieure donc de l'élément porté. La masse de l'élément porté s'oppose par gravité au déplacement vertical, ce qui permet avec un choix judicieux de la forme des profils de chemins de roulement de combiner sélectivement l'accélération et le déplacement de l'élément par rapport au support.

Dans tous les cas où les sollicitations ont pour origine le support fixe par exemple dans le cas d'un séisme provoquant des oscillations importantes du sol et de la surface de support reposant sur le sol, l'action du dispositif d'appui pour diminuer les déplacements et/ou les accélérations de l'élément porté par rapport à ce support met en jeu les mêmes déplacements que ceux qui ont été décrits dans le cas d'un déplacement horizontal de l'élément porté par rapport au support fixe.

Dans tous les cas, les effortrs d'inertie dans la direction verticale suivant un axe Z perpendiculaire aux axes Z et Y sont transmises intégralement de l'élément porté à l'élément porteur ou inversement. Dans ce cas ni les déplacements ni les accélérations ne sont donc atténués par le dispositif suivant l'invention.

En réalité, dans le cas de casier pour assemblage pour réacteurs nucléaires, ces casiers sont contitués d'éléments modulaires juxtaposés et chacun de ces éléments modulaires est mis en appui sur quatre dispositifs tels que celui qui vient d'être décrit.

On constate que la réaction de l'ensemble du dispositif d'appui constitué par quatre dispositifs élémentaires est similaire à celle du système élémentaire lui-même.

L'invention ne se limite pas au mode de réalisation qui vient d'être décrit mais en comporte au contraire toutes les variantes.

C'est ainsi qu'on peut imaginer l'utilisation d'un nombre quelconque de rouleaux dans chacun des ensembles supérieurs ou inférieurs du dispositif d'appui.

Ces différents rouleaux peuvent être disposés à entraxe fixe grace à une barre de jonction reliant leurs axes ou au contraire être disposés librement de façon individuelle ou par groupes partiels, en profitant d'une forme spéciale des pistes de roulement maintenant les rouleaux dans des positions écartées.

Les pistes de roulement peuvent être rapportées sur les pièces d'appui ou au contraire usinées directement dans ces pièces d'appui.

Les rouleaux eux-mêmes peuvent être réalisés sous forme monobloc ou au contraire comporter plusieurs parties enfilées sur un même axe.

Il est également possible d'intercaler entre la pièce d'appui inférieure reposant sur le support fixe et ce support fixe, des moyens de soutien et de réglage mécaniques ou hydrauliques permettant de régler l'horizontalité de l'ensemble de rouleaux inférieurs.

Enfin, le dispositif suivant l'invention peut trouver une utilisation en dehors du support des casiers pour assemblages combustibles dans la piscine de stockage d'un réacteur à eau sous pression.

C'est ainsi qu'on peut utiliser ces dispositifs d'appui chaque fois qu'on veut éviter des déformations d'une structure supportée pouvant subir des sollicitations mécaniques ou thermiques. Dans tous les cas, le dispositif permet de rendre les accélérations induites et les déplacements minimum sans utilisation de dispositifs de guidage de blocage ou d'amortissement placés latéralement par rapport à la structure.

### Revendications

1. Dispositif d'appui disposé entre un élément de masse importante (1) et un support fixe (12), permettant de limiter les déplacements et les accélérations de l'élément (1) par rapport au support (12), lors de mouvements provoqués par des sollicitations telles que celles provenant d'un séisme, comportant des rouleaux cylindriques (14, 14, 17, 18) disposés horizontalement suivant deux ensembles superposés d'au moins deux rouleaux parallèles, les rouleaux d'un ensemble (14, 15) ayant leurs axes perpendiculaires aux axes des rouleaux de l'autre ensemble (17, 18) et un ensemble de trois pièces d'appui (4, 10, 11) totalement indépendantes les unes des autres superposées et comportant sur leurs faces en regard des pistes de roulement (9, 20, 21, 24) inclinées par rapport au plan horizontal et présentant un profil correspondant à la forme des rouleaux dans la diretion longitudinale de ceux-ci, les rouleaux (14, 15) du premier ensemble étant disposés entre la pièce d'appui supérieure (4) portant l'élément (1) et la pièce d'appui intermédiaire (10) et étant en contact avec les pistes (9,20) en regard des pièces d'appui supérieure (4) et intermédiaire (100) et les rouleaux (17, 18) du second ensemble placés entre la pièce intermédiaire (10) et la pièce inférieure (11) reposant sur une surface horizontale du support (12), lesdits rouleaux étant en contact avec les pistes (21, 24) en regard prévues sur les pièces d'appui inférieure (11) et intermédiaire (10), caractérisé par le fait que chacun des rouleaux (14, 15, 17, 18) comporte dans la direction axiale une partie centrale (15a) de révolution et deux parties terminales de révolution (15b et 15c) évasées vers l'exérieur.

2. Dispositif d'appui suivant la revendication 1, dans le cas où l'élément de poid important est un casier de stockage pour assemblage combustible de réacteur nucléaire, caractérisé par le fait que la pièce d'appui inférieure (11) repose sur le support constitué par le fond (12) de la piscine de stockage du combustible du réacteur nucléaire, le dispositif d'appui et le casier de stockage de l'assemblage étant entièrement immergés dans l'eau de la piscine.

### Patentansprüche

1. Abstützvorrichtung, die zwischen einem Element (1) von grosser Masse bzw. grossem Gewicht und einem feststehenden Träger (12) angeordnet ist und eine Einschränkung der Verschiebung und Beschleunigung des Elementes (1) in bezug auf den Träger (12) bei Bewegungen zulässt, die durch Beanspruchungen wie z.B. die von einem Erdbeben verursachten ausgelöst werden, mit zylindrischen Walzen (14, 15, 17, 18), die horizontal in zwei übereinanderliegenden Anordnungen aus jeweils wenigstens zwei parallelen Walzen angeordnet sind, wobei die Walzen der einen Anordnung (14, 15) mit ihren Achsen lotrecht in bezug auf die Achsen der Walzen der anderen Anordnung (17, 18) verlaufen, und mit einer Anordnung aus drei Stützteilen (4, 10, 11), die vollständig unabhängig voneinander übereinandergelagert angeordnet sind und auf ihren gegenüberliegenden Flächen Rollbahnen (9, 20, 21, 24) aufweisen, die in bezug auf die horizontale Ebene geneigt sind und ein Profil besitzen, welches der Form der Walzen in Längsrichtung derselben entspricht, wobei die Walzen (14, 15) der ersten Anordnung zwischen dem oberen Stützteil (4), der das Element (1) trägt, und dem mittleren Stützteil (10) angeordnet sind und mit den Rollbahnen (9, 20) in Berührung stehen, die dem oberen Stützteil (4) und dem dazwischenliegenden Stützteil (10) zugewandt sind, wobei die Walzen (17, 18) der zweiten Anordnung, die zwischen dem mittleren Stützteil (10) und dem unteren Stützteil (11) angeordnet sind, auf einer horizontalen Fläche des Trägers (12) aufruhen und die Walzen in Berührung mit den zugewandten Rollbahnen (21, 24) stehen, die auf dem unteren und mittleren Stützteil (11 bzw. 10) vorgesehen sind, dadurch gekennzeichnet, dass jede der Walzen (14, 15, 17, 18) in axialer Richtung einen zentralen Umdrehungsabschnitt (15a) und zwei Umdrehungsendabschnitte (15b und 15c) aufweist, die nach aussen hin erweitert sind.

2. Abstützvorrichtung nach Anspruch 1 für den Fall, dass das Element von grossem Gewicht ein Lagerfachgestell für den Brennsatz eines Kernreaktors ist, dadurch gekennzeichnet, dass der untere Stützteil (11) auf dem Träger aufruht, der vom Boden (12) des Lagerbeckens für Brennstoff des Kernreaktors gebildet wird und dass die Abstützvorrichtung und das Lagerfachgestell für den Brennsatz vollständig im Wasser des Lagerbeckens untergetaucht sind.

## Claims

1. Bearing device arranged between a component of a great mass (1) and a fixed support (12), making it possible to restrict the movements and the accelerations of the component (1) relative to the support (12), during motions caused by stresses such as those produced by an earth tremor, comprising cylindrical rollers (14,15,17,18) arraged horizontally in two superposed groups of at least two parallel rollers, the rollers of one group (14,15) having their axes perpendicular to the axes of the rollers of the other group (17,18) and a group of three bearing parts (4,10,11) completely independent of each other, superposed and having on their opposed faces rolling tracks (9,20,21,24) which are inclined relative to the horizontal plane and have a profile corresponding to the shape of the rollers in the lengthwise direction of the latter, the rollers (14,15) of the first group being arranged between the upper bearing part (4) carrying the component (1) and the intermediate bearing part (10) and being in contact with the tracks (9,20) facing the upper (4) and intermediate (10) bearing parts and the rollers (17,18) of the second group which are placed between the intermediate part (10) and the lower part (11) resting on a horizontal surface of the support (12), the said rollers being in contact with the opposed tracks (21,24) provided on the lower (11) and intermediate (10) bearing parts, characterised in that each of the rollers (14,15,17,18) has, in the axial direction, a central part (15a) of revolution and two end parts of revolution (15b and 15c) widening outwards.

2. Bearing device according to Claim 1, in the case where the component of a great weight is a storage container for a nuclear reactor fuel assembly, characterised in that the lower bearing part (11) rests on the support formed by the bottom (12) of the nuclear reactor fuel storage pond, the bearing device and the assembly storage container being wholly immersed in the water of the pond.

Fig 1

Fig 2